# EUROPÄISCHE PATENTANMELDUNG

(11) **EP 1 336 914 A2**
(43) Veröffentlichungstag der Anmeldung: **20.08.2003**
(21) Anmeldenummer: 03001224.9
(22) Anmeldetag: 20.01.2003
(51) Int. Cl.: G06F 1/00

(54) **Sicherheits-Token**

(30) Priorität: 18.02.2002 DE 10206677
(71) Anmelder: Giesecke & Devrient GmbH, 81677 München (DE)
(72) Erfinder: Weikmann, Franz, Dr., 81675 München (DE); Ciesinger, Daniel, 80637 München (DE)

(57) **Zusammenfassung**

Beschrieben wird ein Sicherheits-Token (1) mit einer in einem Gehäuse (2) angeordneten elektronischen Schaltung mit einem Speicher zur Generierung und/oder Speicherung eines Authentisierungscodes zur Authentisierung eines Benutzers gegenüber einem Computersystem. Dieses Sicherheits-Token (1) weist Mittel zum Empfang von Identifikationsdaten des Benutzers, eine Geräteschnittstelle (3) zur Verbindung mit einer Standardschnittstelle des Computersystems sowie Mittel auf, um nach einem Empfang von Identifikationsdaten des Nutzers den Authentisierungscode über die Geräteschnittstelle (3) an das Computersystem und/oder das Netzwerk zu übertragen. Die Mittel zum Empfang der Identifikationsdaten umfassen dabei eine in das Gehäuse (2) integrierte Identifikationsdatenerfassungseinrichtung (4, 5) zur unmittelbaren Erfassung der Identifikationsdaten vom Benutzer.

## Beschreibung

Die Erfindung betrifft ein Sicherheits-Token mit einer in einem Gehäuse angeordneten elektronischen Schaltung mit einem Speicher zur Generierung und/oder Speicherung eines Authentisierungscodes zur Authentisierung eines Benutzers gegenüber einem Computersystem, mit Mitteln zum Empfang von Identifikationsdaten des Benutzers, mit einer Geräteschnittstelle zur Verbindung mit einer Standardschnittstelle des Computersystems und mit Mitteln, um nach einem Empfang der Identifikationsdaten des Benutzers den Authentisierungscode über die Geräteschnittstelle an das Computersystem zu übertragen.

Zur Sicherung von Computersystemen, d. h. beispielsweise zur Sicherung der Benutzung der Hardware selbst, zur Sicherung des Zugangs zu einem bestimmten Netzwerk oder zur Benutzung einer bestimmten Software bzw. bestimmter Dienste werden im einfachsten Fall Passwörter benutzt. Die Verwendung solcher statischen Passwörter birgt aber immer die Gefahr, dass diese irgendwann ausspioniert werden und somit die Sicherung umgangen werden kann. Es sind daher zumindest bei sehr sicherheitskritischen Computersystemen Maßnahmen notwendig, die eine höhere Sicherheit gewährleisten. Mit einer weiteren Ausweitung des elektronischen Datenverkehrs, insbesondere mit der zunehmenden Übermittlung von sicherheitsrelevanten Dokumenten im allgemeinen Geschäftsverkehr, bestehen darüber hinaus zusätzliche Sicherheitsbedürfnisse, die durch Passwörter nicht gewährleistet werden können, wie beispielsweise die Signierung von elektronischen Dokumenten mit einer fälschungssicheren elektronischen Signatur.

Eine Möglichkeit, in solchen Fällen eine erhöhte Sicherheit zu erreichen, ist die Verwendung eines sogenannten "Sicherheits-Token". Ein Beispiel für ein solches Sicherheits-Token ist das derzeit im Handel erhältliche eToken ® der Firma Aladdin®. Hierbei handelt es sich um ein Gerät mit einem Gehäuse, das in etwa die Maße eines normalen Haustür- oder Autoschlüssels aufweist. Im Gehäuse befindet sich eine elektronische Schaltung mit einem Speicher. Außerdem ist in das Gehäuse eine USB-Schnittstelle (Universal Serial Bus) integriert, so dass das Sicherheits-Token direkt in eine entsprechende USB-Schnittstelle eines Terminals bzw. eines PCs gesteckt werden kann.

In einer einfachen Version wird der Sicherheits-Token lediglich als Speicher für zuvor eingegebene Passwörter oder Zertifikate zur Anmeldung in Netzwerken oder in Applikationen sowie zur digitalen Signatur von Dateien oder E-Mails benutzt. Die Passwörter oder Zertifikate bzw. die digitale Signatur werden dabei nicht im Sicherheits-Token selbst erstellt.

In einer Version, welche erhöhte Sicherheit bietet, befindet sich innerhalb der elektronischen Schaltung ein sogenannter "SmartCard-Chip" oder ein ähnlicher aktiver Baustein, der die benötigten der individuellen geheimen Dateien, d. h. die Passwörter, die Zertifikate oder Signaturen direkt auf dem Sicherheits-Token generiert. Derartige im Token gespeicherte oder generierte Passwörter, Zertifikate, digitale Signaturen etc. werden im Folgenden der Einfachheit halber als "Authentisierungscodes" bezeichnet.

Mit einem solchen aktiven Sicherheits-Token ist es beispielsweise möglich, eine Verbindung durch ein "Challenge-Response-Verfahren" zu sichern. Hierzu wird von dem Computersystem bzw. der genutzten Applikation aus eine Zufallszahl (Challenge) an das Sicherheits-Token übermittelt. Dieser berechnet dann anhand der Zufallszahl als Antwort (Response) den Authentisierungscode. Im Computersystem bzw. der Applikation wird dann die Antwort überprüft und daraus beispielsweise die Seriennummer des Token berechnet, welche eindeutig einem Benutzer zugeordnet ist. Da sich sowohl die Zufallszahl als auch dementsprechend der Authentisierungscode ständig ändern, ist beim Abhören des Datenverkehrs eine maximale Sicherheit gewährleistet.

Eine weitere Erhöhung der Sicherheit wird erreicht, wenn der Benutzer zusätzlich noch im Besitz individueller, ihm zugeordneter Identifikationsdaten sein muss. Bei diesen Identifikationsdaten kann es sich z. B. um eine geheime PIN oder auch um biometrische Daten, beispielsweise einen Fingerabdruck des Benutzers handeln. Für eine erfolgreiche Authentisierung muss daher der Benutzer zwei Voraussetzungen erfüllen. Zum einen muss er sich im Besitz des Tokens befinden, und zum anderen muss er in der Lage sein, die passenden Identifikationsdaten einzugeben, d. h. er muss den passenden Fingerabdruck oder dergleichen aufweisen und/oder die richtige PIN kennen. Da der Besitz des Sicherheits-Tokens allein nicht mehr ausreicht, kann - genau wie bei der Verwendung einer Chipkarte in Kombination mit einer Geheimnummer - die Gefahr reduziert werden, dass beim Verlust des Sicherheits-Tokens dieser von einem unberechtigten Benutzer missbraucht werden kann.

Die Identifikationsdaten können zusätzlich zum Authentisierungscode an das Computersystem, beispielsweise über das Netz an den betreffenden Server, welcher die Authentisierung durchführt, übertragen werden. Die authentisierende Stelle kann dann den Benutzer zum einen wie oben beschrieben über das Sicherheits-Token und zum anderen über die eingegebenen Identifikationsdaten identifizieren. Es wird dann die Übereinstimmung geprüft. Dieser Weg hat jedoch den Nachteil, dass die statischen Identifizierungsdaten bei. der Übermittlung an das Computersystem abgehört und gegebenenfalls missbraucht werden können, indem beispielsweise gezielt der Person, deren Daten abgehört werden, das Sicherheits-Token entwendet wird. Um dies zu verhindern, ist es auch möglich, die Identifizierungsdaten direkt an das Sicherheits-Token zu übermitteln, welches beispielsweise erst nach Empfang der richtigen Identifizierungsdaten des Benutzers den Authentisierungscode über die Geräteschnittstelle an das Computersystem überträgt oder in einer bevorzugten Variante die Identifizierungsdaten beispielsweise in die Berechnung des Authentisierungscodes statt einer Seriennummer des Sicherheits-Tokens oder zusätzlich zur Seriennummer einbezieht.

Üblicherweise werden dazu bisher die Identifikationsdaten, wie eine PIN, vom Benutzer an einer Tastatur des verwendeten Terminals, beispielsweise eines PCs, eingegeben und über die Geräteschnittstelle, z. B. die USB-Schnittstelle, an das Sicherheits-Token übertragen. Diese Übertragung vom Terminal zum Sicherheits-Token birgt aber noch ein Restrisiko, das die Daten "abgehört" werden. So könnten durch auf dem jeweiligen Terminal unbemerkt hinterlegte Abhör-Software - häufig auch als sogenanntes "Trojanisches Pferd" bezeichnet, da sie oft vom Benutzer als unbemerkter Anhang mit einer von ihm gewünschten Software freiwillig auf den Rechner geladen wird - die Identifikationsdaten auf dem Weg vom Eingabemedium zum Sicherheits-Token gezielt ausspioniert werden.

Es ist Aufgabe der vorliegenden Erfindung, eine Alternative zu diesem Stand der Technik zu schaffen, welche die Abhörsicherheit der Identifikationsdaten des Benutzers erheblich erhöht.

Diese Aufgabe wird durch ein Sicherheits-Token gemäß Patentanspruch 1 gelöst. Die Unteransprüche umfassen besonders vorteilhafte Weiterbildungen und Ausführungsbeispiele der Erfindung.

Durch die Integration von Mitteln zum Empfang der Identifikationsdaten in das Gehäuse des Sicherheits-Tokens selbst, welche eine unmittelbare Erfassung der Identifikationsdaten vom Benutzer ermöglichen, ist ein Abhören der Identifikationsdaten durch feindliche Software auf dem benutzten Terminal nicht mehr möglich.

Bei der Identifikationsdatenerfassungseinrichtung handelt es sich in einem ersten Ausführungsbeispiel um eine Benutzerschnittstelle zur Eingabe eines Codes, insbesondere eines alphanumerischen Codes, beispielsweise einer PIN.

Die Benutzerschnittstelle soll erfindungsgemäß innerhalb des Gehäuses des Sicherheits-Tokens integriert sein. Andererseits sollen aber die Außenmaße des Sicherheits-Tokens sehr gering sein, da der Benutzer das Sicherheits-Token ja ständig mit sich führen muss. Daher handelt es sich sinnvollerweise um eine miniaturisierte Benutzerschnittstelle, welche vorzugsweise maximal zwei Bedienelemente, d.h. nur zwei Tasten oder dergleichen, umfasst. Besonders bevorzugt handelt es sich um eine Benutzerschnittstelle mit nur einem einzigen Bedienelement.

Eine solche Benutzerschnittstelle mit einem oder maximal zwei Bedienelementen ist realisierbar, indem die Benutzerschnittstelle ein Bedienelement zur Auswahl eines Codeelements aus einer Gruppe von möglichen Codeelementen, beispielsweise alphanumerischen Zeichen oder Symbolen, sowie Bestätigungsmitteln zur Bestätigung der Auswahl des betreffenden Codeelements und/oder zur Bestätigung des eingegebenen Codes umfasst.

Um den Benutzer bei der Eingabe durch eine Art Dialog zu leiten und somit eine sichere und einfache Eingabe des notwendigen Codes zu gewährleisten, weist die Benutzerschnittstelle vorzugsweise eine Anzeigeeinrichtung zur Anzeige des ausgewählten Codeelements auf. Diese Anzeigeeinrichtung kann auch dazu verwendet werden, um eine Auswahlaufforderung anzuzeigen, woraufhin der Benutzer ein bestimmtes Codeelement auszuwählen hat. Oder es wird eine Bestätigungsaufforderung angezeigt, woraufhin der Benutzer ein ausgewähltes Codeelement oder den gesamten eingegebenen Code zum Abschluss bestätigen muss. Im einfachsten Fall handelt es sich bei der Anzeigeeinrichtung um eine übliche Sieben-Segment-Anzeige, welche beispielsweise aus LEDs aufgebaut sein kann.

Bei einem Ausführungsbeispiel weist die Benutzerschnittstelle eine oder mehrere Auswahltasten zur Auswahl eines Codeelements auf. Durch Drükken dieser bzw. einer dieser Auswahltasten wird beispielsweise reihum immer das nächstmögliche oder vorhergehende Codeelement der Gruppe von auswählbaren Codeelementen auf der Anzeigeeinrichtung dargestellt. Um das jeweilige Codeelement einzugeben, muss lediglich das ausgewählte und auf der Anzeigeeinrichtung dargestellte Codeelement mittels einer Bestätigungstaste oder auf andere Weise bestätigt werden.

Bei einem besonders bevorzugten Ausführungsbeispiel umfasst die Benutzerschnittstelle ein von dem Benutzer um eine Rotationsachse drehbares Bedienelement wie beispielsweise eine Walze oder ein Rändelrad sowie Mittel zur Auswahl eines Codeelements in Abhängigkeit von einem Drehwinkel dieses Bedienelements. Durch Drehen eines solchen Bedienelements kommt der Nutzer erheblich schneller zu dem jeweiligen auszuwählenden Codeelement als durch eine entsprechende Anzahl von Tastendrücken. Sofern die Benutzerschnittstelle eine Anzeigeeinrichtung aufweist, wird das in Abhängigkeit vom Drehwinkel jeweils ausgewählte Codeelement vorteilhafterweise auf dieser Anzeigeeinrichtung angezeigt. Es ist aber auch möglich, direkt auf dem drehbaren Bedienelement die auswählbaren Codeelemente, beispielsweise die Ziffern von "0" bis "9", zu markieren und am Gehäuse eine statische Markierung vorzusehen, so dass automatisch immer das auf dem drehbaren Bedienelement an der am Gehäuse markierten Position befindliche Codeelement ausgewählt wird.

Eine Bestätigung des ausgewählten Codeelements und/oder des gesamten Codes ist auf verschiedene Weise möglich. Eine Möglichkeit besteht darin, dass die Benutzerschnittstelle eine separate Bestätigungstaste aufweist, so dass der Benutzer durch Drücken dieser Bestätigungstaste ein ausgewähltes Codeelement bestätigt und/oder den bereits eingegebenen Code bestätigt. Eine weitere Möglichkeit ist, dass die Benutzerschnittstelle Mittel zur automatischen Bestätigung eines ausgewählten Codeelements bzw. des eingegebenen Codes nach Ablauf einer bestimmten Zeitspanne nach der letzten Betätigung eines Betätigungselements durch den Benutzer aufweist. Auf diese Weise kann beispielsweise die Benutzerschnittstelle mit nur einer einzelnen Taste - zusätzlich zur Anzeigeeinrichtung - realisiert werden.

Bei dem bereits oben beschriebenen bevorzugten Ausführungsbeispiel mit dem drehbaren Bedienelement ist das Bedienelement vorzugsweise so ausgestaltet, dass es zur Bestätigung eines ausgewählten Codeelements und/oder des eingegebenen Codes quer zur Rotationsachse gedrückt werden kann. Auch bei diesem Ausführungsbeispiel ist folglich nur ein einziges Bedienelement erforderlich, um die Benutzerschnittstelle zu realisieren.

Bei einem weiteren bevorzugten Ausführungsbeispiel ist die Anzeigeeinrichtung in ein Bedienelement, beispielsweise in eine Taste, integriert bzw. umgekehrt. So ist z. B. die Verwendung einer Anzeigeeinrichtung nach Art eines Touch-Screen denkbar, bei dem der Benutzer einfach auf die Anzeigeeinrichtung drückt. Dabei ist es auch möglich, die Funktion von zwei Tasten in die Anzeigeeinrichtung zu integrieren, indem beispielsweise die Anzeigeeinrichtung in zwei Felder unterteilt wird und durch Drücken eines Feldes die Auswahl eines Codeelements und durch Drücken eines anderen Feldes die Bestätigung erfolgt.

Zusätzlich oder alternativ zu einer solchen Benutzerschnittstelle kann die Identifikationsdatenerfassungseinrichtung auch einen Sensor zur Erfassung biometrischer Daten des Benutzers, beispielsweise einen Fingerabdrucksensor, aufweisen.

Das erfindungsgemäße Sicherheits-Token ist vorzugsweise mit einer Geräteschnittstelle mit einem Steckverbindungselement zum Einstecken des Sicherheits-Tokens in eine Standardschnittstelle eines Terminals versehen. Vorzugsweise handelt es sich bei der Geräteschnittstelle um eine USB-Schnittstelle, da dies die derzeit am meisten verbreitete Standardschnittstelle ist .

Bei der Geräteschnittstelle kann es sich aber auch um eine drahtlose Schnittstelle handeln, welche in der Lage ist, mit einer entsprechenden drahtlosen Standardschnittstelle des Computersystems zu kommunizieren, beispielsweise eine Infrarotschnittstelle oder eine kurzreichweitige Funkschnittstelle.

Um das Sicherheits-Token an möglichst vielen Terminals einsetzen zu können, kann es außerdem auch mit verschiedenen Geräteschnittstellen ausgestattet sein, um die Wahrscheinlichkeit zu erhöhen, dass eine Kommunikation mit einem beliebigen Terminal möglich ist. Da für eine Steckverbindung entsprechend Platz am Gehäuse benötigt wird, bietet es sich insbesondere an, neben einer Steckverbindungsschnittstelle gegebenenfalls weitere drahtlose Schnittstellen vorzusehen, welche keinen großen Platz am bzw. im Gehäuse beanspruchen.

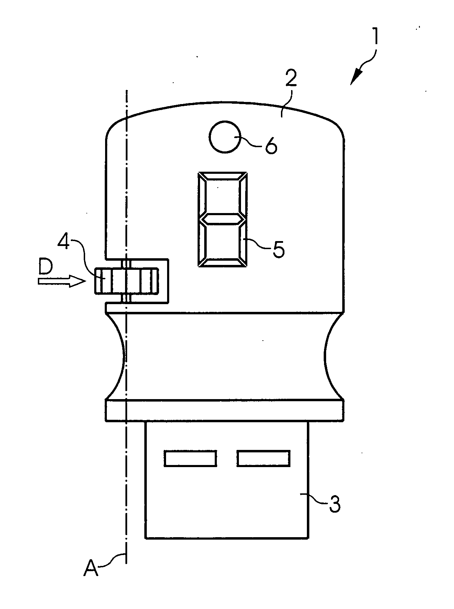

Die Erfindung wird im Folgenden anhand eines Ausführungsbeispiels unter Hinweis auf die beigefügte Figur näher erläutert. Die einzige Figur zeigt eine Draufsicht auf ein erfindungsgemäßes USB-Token mit einer im Gehäuse integrierten, miniaturisierten Benutzerschnittstelle zur Eingabe einer PIN.

Das Sicherheits-Token 1 weist - wie die bekannten Sicherheits-Token - ein relativ kleines, längliches Gehäuse 2 auf, das in etwa die Außenmaße eines normalen Schlüssels hat. An seinem einen Ende ist das Gehäuse 2 mit einer USB-Schnittstelle 3 versehen. Die Breite und auch die Dicke des Sicherheits-Token 1 werden daher im Wesentlichen durch die Maße des Steckers der USB-Schnittstelle 3 bestimmt. Mit dieser USB-Schnittstelle 3 kann das Sicherheits-Token 1 in eine USB-Schnittstelle eines PCs oder eines sonstigen Terminals eingesteckt werden.

An dem der USB-Schnittstelle 3 gegenüberliegenden Ende befindet sich im Gehäuse 2 eine Bohrung 6. Durch diese Bohrung 6 kann das Sicherheits-Token 1 beispielsweise an einem Schlüsselring des Benutzers gemeinsam mit anderen Schlüsseln befestigt werden, so dass der Benutzer das Sicherheits-Token 1 nicht verliert.

Im Inneren des Gehäuses 2 befindet sich eine elektronische Schaltung mit einem Speicher, welche weitgehend wie die Schaltungen der bisher bekannten Sicherheits-Token aufgebaut ist. Die Schaltung muss lediglich entsprechend für die Eingabe der PIN über die dargestellte Benutzerschnittstelle 4, 5 modifiziert werden. Dies lässt sich bei Verwendung eines Mikroprozessors bzw. eines intelligenten Chips innerhalb des Sicherheits-Tokensdurch eine einfache Veränderung der Software erreichen. Zusätzlich müssen dann nur Verbindungsleitungen zwischen der Schaltung und den Komponenten der Benutzerschnittstelle 4, 5 geschaffen werden.

Die Benutzerschnittstelle selbst umfasst als einen wesentlichen Bestandteil ein Rändelrad 4, welches um eine Rotationsachse A im Gehäuse 2 des Sicherheits-Tokens 1 drehbar gelagert ist. Das Rändelrad 4 ist vorzugsweise - wie in der Figur dargestellt - an einer Kante des Gehäuses 2 teilweise versenkt angebracht, so dass der Benutzer das Rändelrad 4 bequem drehen kann. Das Rändelrad 4 ist außerdem quer zur Achse A in einer Druckrichtung D verschiebbar und wirkt bei einem Druck in diese Richtung D wie ein Schalter.

Zur Benutzerschnittstelle 4, 5 gehört außerdem eine aus LEDs aufgebaute Sieben-Segment-Anzeige 5.

Die Eingabe der PIN erfolgt mittels des Rändelrads 4 und der Sieben-Segment-Anzeige 5 wie folgt:

Zur Aufforderung, dass der Benutzer seine PIN eingeben soll, wird zunächst ein Aufforderungssymbol oder eine Aufforderungssymbolfolge angezeigt. Hierbei kann es sich entweder um ein einzelnes Symbol, beispielsweise "-" handeln, d. h. es leuchtet einfach der mittlere Balken der Sieben-Segment-Anzeige 5 auf. Vorzugsweise handelt es sich aber um eine Anzeige, bei der der Benutzer die Aufforderungsabsicht sofort erfasst. Dies ist beispielsweise möglich, indem auf der Sieben-Segment-Anzeige zyklisch die Zeichen- bzw. Buchstabenfolge "P-I-n" angezeigt wird.

Das Aufforderungssymbol bzw. die Aufforderungssymbolfolge wird durch eine Ziffer ersetzt, sobald das Rändelrad 4 gedreht wird. Dabei wird entsprechend dem Drehwinkel des Rändelrads 4 eine diesem Drehwinkel zugeordnete Ziffer von "0" bis "9" angezeigt. Der Benutzer kann so die erste Ziffer der gewünschten PIN auswählen. Sobald die vom Benutzer gewünschte Ziffer auf der Anzeigeeinrichtung 5 dargestellt wird, drückt der Benutzer das Rändelrad 4 in der Druckrichtung D, wodurch die Eingabe der ausgewählten Ziffer bestätigt wird.

Anschließend kann beispielsweise ein weiteres Aufforderungssymbol angezeigt werden, welches den Benutzer zur Eingabe der nächsten Ziffer auffordert, beispielsweise wieder ein blinkendes Symbol "_", d. h. es blinkt nur der untere Balken der Sieben-Segment-Anzeige 5 ähnlich wie ein Cursor auf. Sobald der Anwender das Rändelrad 4 wieder dreht, wird entsprechend die neue ausgewählte Ziffer angezeigt. Die Bestätigung der dann ausgewählten Ziffer erfolgt wiederum durch Drücken des Rändelrads 4 in der Druckrichtung D.

Dieser Vorgang wird fortgesetzt, bis die gesamte PIN eingegeben ist. Wird das Rändelrad bei Erscheinen des Aufforderungssymbols "_" oder eines ähnlichen Symbols nicht gedreht, sondern sofort gedrückt, so wird dies von dem Sicherheits-Token 1 als Bestätigung der gesamten PIN-Eingabe erkannt, d. h. die Eingabe der PIN ist beendet.

Das dargestellte Ausführungsbeispiel erlaubt eine besonders zügige und intuitiv klare Eingabe der PIN, wobei die PIN nicht mehr über ein Terminal oder einen PC an das Sicherheits-Token übertragen wird. Ein Abhören der PIN ist somit nicht möglich, da die eingegebene PIN selbst das Sicherheits-Token nicht verlässt. Ein solches Sicherheits-Token erfüllt daher die höchsten Sicherheitsanforderungen entsprechend den Klasse-3-Lesern zum Lesen von SmartCards. Eine solche Sicherheitsstufe der Klasse 3 erlaubt es somit, das Sicherheits-Token mit einer Geldkartenfunktionalität auszustatten.

## Patentansprüche

1. Sicherheits-Token (1) mit
- einer in einem Gehäuse (2) angeordneten elektronischen Schaltung mit einem Speicher zur Generierung und/oder Speicherung eines Authentisierungscodes zur Authentisierung eines Benutzers gegenüber einem Computersystem,
- Mitteln zum Empfang von Identifizierungsdaten des Benutzers
- einer Geräteschnittstelle (3) zur Verbindung mit einer Standardschnittstelle des Computersystems,
- und Mitteln, um nach einem Empfang der Identifikationsdaten des Benutzers den Authentisierungscode über die Geräteschnittstelle (3) an das Computersystem zu übertragen,
**dadurch gekennzeichnet,**
**dass** die Mittel zum Empfang der Identifikationsdaten eine in das Gehäuse (2) integrierte Identifikationsdatenerfassungseinrichtung (4, 5) zur unmittelbaren Erfassung der Identifikationsdaten vom Benutzer umfassen.

2. Sicherheits-Token nach Anspruch 1, **dadurch gekennzeichnet, dass** die Identifikationsdatenerfassungseinrichtung (4, 5) eine Benutzerschnittstelle (4, 5) zur Eingabe eines Codes umfasst.

3. Sicherheits-Token nach Anspruch 1 oder 2, **dadurch gekennzeichnet, dass** die Benutzerschnittstelle maximal zwei Bedienelemente (4) umfasst.

4. Sicherheits-Token nach Anspruch 3, **dadurch gekennzeichnet, dass** die Benutzerschnittstelle (4, 5) nur ein Bedienelement (4) umfasst.

5. Sicherheits-Token nach einem der Ansprüche 2 bis 4, **dadurch gekennzeichnet, dass** die Benutzerschnittstelle (4, 5) ein Bedienelement (4) zur Auswahl eines Codeelementes aus einer Gruppe von möglichen Codeelementen und Bestätigungsmittel (4) zur Bestätigung der Auswahl des betreffenden Codeelements und/oder zur Bestätigung des eingegebenen Codes umfasst.

6. Sicherheits-Token nach Anspruch 5, **dadurch gekennzeichnet,**
**dass** die Benutzerschnittstelle (4, 5) eine Anzeigeeinrichtung (5) zur Anzeige des ausgewählten Codeelements und/oder zur Anzeige einer Auswahlund/oder Bestätigungsaufforderung aufweist.

7. Sicherheits-Token nach Anspruch 5 oder 6, **dadurch gekennzeichnet,**
**dass** die Benutzerschnittstelle ein vom Benutzer um eine Rotationsachse (A) drehbares Bedienelement (4) und Mittel zur Auswahl eines Codeelements in Abhängigkeit von einem Drehwinkel des Bedienelements (4) umfasst.

8. Sicherheits-Token nach Anspruch 5 oder 6, **dadurch gekennzeichnet, dass** die Benutzerschnittstelle wenigstens eine Auswahltaste zur Auswahl eines Codeelements umfasst.

9. Sicherheits-Token nach einem der Ansprüche 5 bis 8, **dadurch gekennzeichnet, dass** die Benutzerschnittstelle wenigstens eine Bestätigungstaste zur Bestätigung eines ausgewählten Codeelements umfasst.

10. Sicherheits-Token nach einem der Ansprüche 5 bis 9, **dadurch gekennzeichnet, dass** die Benutzerschnittstelle Mittel zur automatischen Bestätigung eines ausgewählten Codeelements und/oder des eingegebenen Codes nach Ablauf einer bestimmten Zeitspanne nach der letzten Betätigung eines Betätigungselements durch den Benutzer aufweist.

11. Sicherheits-Token nach Anspruch 7, **dadurch gekennzeichnet, dass** das drehbare Bedienelement (4) zur Bestätigung eines ausgewählten Codeelements und/oder des eingegebenen Codes quer zur Rotationsachse (A) drückbar ist.

12. Sicherheits-Token nach einem der Ansprüche 1 bis 11, **dadurch gekennzeichnet, dass** die Identifikationsdatenerfassungseinrichtung einen Sensor zur Erfassung biometrischer Daten des Benutzers umfasst.

13. Sicherheits-Token nach einem der Ansprüche 1 bis 12, **dadurch gekennzeichnet, dass** die Geräteschnittstelle (3) ein Steckverbindungselement umfasst.

14. Sicherheits-Token nach Anspruch 13, **dadurch gekennzeichnet, dass** die Geräteschnittstelle (3) eine USB-Schnittstelle (3) umfasst.
